# EUROPÄISCHE PATENTSCHRIFT

(11) **EP 1 544 525 B1**
(45) Veröffentlichungstag und Bekanntmachung des Hinweises auf die Patenterteilung: **17.05.2006**
(21) Anmeldenummer: 04027358.3
(22) Anmeldetag: 18.11.2004
(51) Int. Cl.: F16K 31/06

(54) **Elektromagnetisches Hydraulikventil**
Solenoid operated hydraulic valve
Electrovanne hydraulique

(30) Priorität: 18.12.2003 DE 10359363
(43) Veröffentlichungstag der Anmeldung: 22.06.2005
(73) Patentinhaber: Schaeffler KG, 91074 Herzogenaurach (DE)
(72) Erfinder: Golovatai-Schmidt, Eduard, 91341 Röttenbach (DE); Kraemer, Michael, 71404 Korb (DE)

(56) Entgegenhaltungen:
- DE-A1- 2 124 484
- DE-A1- 4 003 606
- DE-A1- 4 007 009
- DE-A1- 19 908 440
- US-A- 4 951 703
- US-A- 5 102 096
- US-B1- 6 273 122

## Beschreibung

### Gebiet der Erfindung

Die Erfindung betrifft ein elektromagnetisches Hydraulikventil nach den oberbegriffsbildenden Merkmalen des Anspruchs 1, und sie ist insbesondere vorteilhaft an einem 3/2-Wegeschaltventil zur Steuerung eines variablen Ventiltriebes einer Brennkraftmaschine realisierbar.

### Hintergrund der Erfindung

Durch die DE 199 084 40 A1 ist ein gattungsbildendes elektromagnetisches Hydraulikventil vorbekannt, welches als 3/2-Wegeschaltventil ausgebildet ist und im Wesentlichen aus einem Elektromagnet mit einem axial beweglichen Magnetanker sowie aus einem Ventilteil mit zumindest zwei Ventilsitzen und einer mit zumindest einem Ventilsitz korrespondierenden Schließkugel besteht. Der Elektromagnet wird dabei durch einen hohlzylindrischen Kunststoff-Spulenkörper mit einem elektrischem Steckkontakt, zumindest einer im Spulenkörper aufgenommenen Spulenwicklung und einem die Spulenwicklung umschließenden Magnetgehäuse gebildet, wobei der Hohlzylinder des Kunststoff-Spulenkörpers zumindest teilweise als Ankerraum des Magnetankers ausgebildet ist, der mit einer amagnetischen Metallhülse ausgekleidet ist. Das Magnetgehäuse des Elektromagneten ist dagegen als Zylinderrohrhülse ausgebildet, deren eine Stirnseite einen kreisringförmigen Boden bildend in das Hülseninnere abgewinkelt ist und deren andere Stirnseite mehrere Bördellaschen aufweist, mit denen das Magnetgehäuse mit dem in dasselbe einsetzbaren Kunststoff-Spulenkörper verbunden ist. Eine in den Kunststoff-Spulenkörper eingegossene Metallscheibe sowie ein in den Hohlzylinder des Spulenkörpers eingesetzter Polkern bilden darüber hinaus einen oberen Magnetpol des Elektromagneten, während dessen unter Magnetpol durch einen in den Hohlzylinder des Spulenkörpers einsteckbaren und über den Boden des Magnetgehäuses mit diesem magnetischen leitend verbundenen Fortsatz des Ventilteils des Hydraulikventils gebildet wird. Dieses Ventilteil besteht im Wesentlichen aus einem hohlzylindrischen Ventilgehäuse, das einen stirnseitigen Druckanschluss sowie einen jeweils als Radialöffnung in dessen Mantelfläche ausgebildeten Verbraucheranschluss und einen Tankanschluss aufweist und in dessen Hohlzylinder jeweils zwischen dem Druckanschluss und dem Verbraucheranschluss sowie zwischen diesem und dem Tankanschluss einer der Ventilsitze des Ventilteils angeordnet ist. Die beiden Ventilsitze sind dabei jeweils als Axialdurchbruch im Boden zweier tassenförmiger Tiefziehteile ausgebildet, die über ihrer Umfangsflächen durch Presssitz im Hohlzylinder des Ventilgehäuses befestigt und durch eine Kunststoffhülse miteinander verbunden sind. In dieser Kunststoffhülse wird die lose angeordnete und über einen Stößel mit dem Magnetanker des Elektromagneten in Wirkverbindung stehende Schließkugel des Ventilteils geführt, wobei der Magnetanker im stromlosen Zustand des Elektromagneten durch eine zwischen diesem und dem Polkern des oberen Magnetpols angeordnete Druckfeder eine ständige, den Druckanschluss des Hydraulikventils verschließende Vorspannkraft auf die Schließkugel ausübt. Dieses somit als Zugmagnetventil ausgebildete Hydraulikventil ist mit dem mehrere äußere Dichtringe aufweisenden Ventilteil in eine komplementäre Ventilaufnahme einsteckbar und weist einen zwischen dem Elektromagnet und dem Ventilteil angeordneten, gesonderten Befestigungsflansch auf, über den es druckmitteldicht an der Ventilaufnahme verschraubbar ist.

Nachteilig bei diesem bekannten elektromagnetischen Hydraulikventil ist es jedoch, dass es aus relativ vielen Einzelteilen besteht, die zwar teilweise, wie das Magnetgehäuse und die Ventilsitze spanlos herstellbar sind, von denen jedoch auch einige, wie beispielsweise das Ventilgehäuse des Ventilteils sowie der Magnetanker und der Polkern des oberen Magnetpols des Elektromagneten, relativ massiv ausgebildet und aufgrund ihrer konstruktiven Gestaltung nur durch spanende Fertigungsverfahren herstellbar sind. Die spanende Fertigung verursacht jedoch durch die relativ langen Maschinentaktzeiten, die notwendigen Werkzeuge und Vorrichtung und das verwendete Material einen erheblichen Fertigungsaufwand, der sich letztlich als unwirtschaftlich erwiesen hat. Zusätzlich erhöht sich durch die Vielzahl von Einzelteilen auch der Aufwand bei der Endmontage des Hydraulikventils, so dass bei der Produktion dieses bekannten Hydraulikventils mit ungünstigen Herstellungskosten zu rechnen ist.

### Aufgabe der Erfindung

Der Erfindung liegt deshalb die Aufgabe zugrunde, ein elektromagnetisches Hydraulikventil, insbesondere 3/2-Wegeschaltventil zu Steuerung eines variablen Ventiltriebs einer Brennkraftmaschine, zu konzipieren, welches aus relativ wenigen und einfach gestalteten Einzelteilen besteht und sich durch einen niedrigen Fertigungs- und Montageaufwand sowie durch geringe Herstellungskosten auszeichnet.

### Zusammenfassung der Erfindung

Erfindungsgemäß wird diese Aufgabe bei einem elektromagnetischen Hydraulikventil nach dem Oberbegriff des Anspruchs 1 derart gelöst, dass zumindest das Ventilgehäuse des Ventilteils und/oder der untere Magnetpol des Elektromagneten als spanlos herstellbare Einzelteile ausgebildet sind, wobei der untere Magnetpol mit dem Befestigungsflansch des Hydraulikventils als einstückiges Integralbauteil ausgebildet und zugleich als Steckaufnahme für das Ventilgehäuse vorgesehen ist.

In vorteilhafter Ausgestaltung des erfindungsgemäß ausgebildeten elektromagnetischen Hydraulikventils ist das Ventilgehäuse des Ventilteils dabei als einfacher zylindrischer Rohabschnitt ausgebildet, der durch spanloses Abtrennen von einem Langrohr maßgenau abgelängt wird. Der Verbraucheranschluss und der Tankanschluss des Hydraulikventils wird dann durch Einstanzen axial versetzt zueinander angeordneter Radialdurchbrüche in die Mantelfläche des Ventilgehäuses eingebracht, wobei je nach Anwendung jeder der beiden Anschlüsse entweder nur durch einen Radialdurchbruch oder durch zwei sich gegenüberliegend angeordnete Radialdurchbrüche in der Mantelfläche des Ventilgehäuses gebildet werden kann und die Längsachsen der Anschlüsse um 90° versetzt oder parallel zueinander angeordnet werden können.

Der untere Magnetpol des Elektromagneten ist dagegen in weiter Ausgestaltung des erfindungsgemäß ausgebildeten elektromagnetischen Hydraulikventils als durch Stanzziehen herstellbare Stegkragenhülse ausgebildet, deren Steg den Befestigungsflansch des Hydraulikventils bildet. Der Hülsenteil dieser Stegkragenhülse weist dabei einen Außendurchmesser auf, der dem Innendurchmesser der den Ankerraum des Elektromagneten auskleidenden Metallhülse entspricht und ist in diese Metallhülse derart einsteckbar, dass der Kragen des unteren Magnetpols am Boden des Magnetgehäuses des Elektromagneten magnetisch leitend anliegt. Zweckmäßigerweise weist dieser Kragen dabei zu einer Hälfte einen Radius auf, der etwa dem halben Außendurchmesser des Magnetgehäuses entspricht, während sich an die andere Hälfte des Kragens der als Befestigungsflansch ausgebildete Steg des unteren Magnetpols anschließt. Dieser Steg ist in vorteilhafter Gestaltung zu seinem freien Ende hin sich verjüngend ausgebildet und weist an diesem Ende wiederum einen solchen Radius auf, dass im Drehpunkt des Radius ein Befestigungsloch für eine Schraube angeordnet werden kann.

Im Boden seines Hülsenteils weist der untere Magnetpol darüber hinaus als weiteres Merkmal eine kreisförmige Ausstanzung auf, in welche der Magnetanker bei Bestromung des Elektromagneten zumindest teilweise eintaucht. Als besonders vorteilhaft hat es sich dabei erwiesen, den Durchmesser des Magnetankers ausgehend von dessen ventilseitiger Stirnseite zumindest teilweise passgenau an den Durchmesser der kreisförmigen Ausstanzung anzupassen, um durch einen möglichst geringen Luftspalt zwischen dem Magnetanker und dem unteren Magnetpol einen optimalen Übergang der Magnetfeldlinien vom Magnetanker zum unteren Magnetpol zu erreichen. Der durch die kreisförmige Ausstanzung verbleibende ringförmige Restteil des Bodens am Hülsenteil des unteren Magnetpols bildet dabei gleichzeitig einen doppelseitigen Axialanschlag, der magnetseitig eine Richtung der Axialbewegung des Magnetankers begrenzt und ventilseitig den Montageanschlag für das in dem Hülsenteil des unteren Magnetpols einsteckbare Ventilgehäuse des Hydraulikventils bildet.

Die Montage des unteren Magnetpols am Elektromagneten erfolgt dann derart, dass zunächst die den Ankerraum des Elektromagneten auskleidende Metallhülse in den Kunststoff-Spulenkörper eingesteckt wird und anschließend unter Zwischenlegen eines O-Dichtrings das Magnetgehäuse auf den Kunststoff-Spulenkörper aufgesteckt sowie an diesem verbördelt wird. Danach wird der Magnetanker in den Ankerraum des Elektromagneten eingeführt und der untere Magnetpol mit seinem Hülsenteil soweit in die Metallhülse eingesteckt, bis dessen Kragen am Boden des Magnetgehäuses anliegt. Dadurch kann in vorteilhafter Weise der untere Magnetpol und das Magnetgehäuse des Elektromagneten abschließend durch punkt- oder ringförmiges Induktions- oder Laserschweißen miteinander verbunden werden.

Als weitere vorteilhafte Ausgestaltung des erfindungsgemäß ausgebildeten Hydraulikventils wird es darüber hinaus vorgeschlagen, den oberen Magnetpol des Elektromagneten ebenfalls als durch Stanzziehen herstellbare Kragenhülse auszubilden, die in den Kunststoff-Spulenkörper des Elektromagneten eingegossen wird. Diese Kragenhülse liegt mit der Innenfläche ihres Hülsenteils an der den Ankerraum des Elektromagneten auskleidenden Metallhülse an und ist über ihren bevorzugt rechtwinklig vom Hülsenteil wegragenden Kragen mit dem Magnetgehäuse magnetisch leitend verbunden. Zur Lagerfixierung des oberen Magnetpols im Kunststoff-Spulenkörper weist dieser zusätzlich in seinem Kragen mehrere Ausnehmungen auf, in denen sich beim Spritzgießen des Kunststoff-Spulenkörpers entsprechende Kunststoffübergänge bilden. Als besonders vorteilhafte Ausnehmungen haben sich dabei vier gleichmäßig am Umfang des Kragens angeordnete, rechteckig geformte Ausklinkungen erwiesen, wobei es jedoch auch möglich ist, diese durch koaxiale Stanzlöcher im Kragen des oberen Magnetpols zu ersetzten.

Der Magnetanker des Elektromagneten ist dagegen in weiterer Ausgestaltung des erfindungsgemäß ausgebildeten elektromagnetischen Hydraulikventils als beidseitig offene Hohlzylinderhülse ausgebildet, die ebenfalls spanlos durch Fließpressen mit anschließendem Ausstanzen des Bodens herstellbar ist. Als Werkstoff für dem Magnetanker hat sich dabei ein kohlenstoffarmer Kaltstauchdraht, der nach dem Fließpressen normalgeglüht wird, als besonders geeignet erwiesen, da dieser sich durch gute Fließeigenschaften auszeichnet und zugleich ein guter Magnetflussleiter ist. Die Ausbildung des Magnetankers als Hohlzylinderhülse hat sich besonders hinsichtlich seines geringen Gewichts als vorteilhaft erwiesen, da der Magnetanker somit nur mit einer sehr geringen Hysterese behaftet ist. Gleichzeitig kann in vorteilhafter Weise in die ventilseitige Öffnung der Hohlzylinderhülse ein komplementär ausgebildeter Zentrierzapfen eines mit der Schließkugel und einem der Ventilsitze des Ventilteils in Wirkverbindung stehenden zweiten Schließkörpers derart eingesetzt werden, dass dieser axial und radial spielfrei vom Magnetanker verschoben werden kann.

Der zweite Schließkörper des Ventilteils ist dabei in zweckmäßiger Weiterbildung des erfindungsgemäß ausgebildeten Hydraulikventils bevorzugt als Kunststoff-Spritzgießteil ausgebildet und besteht im Wesentlichen aus einem Zylinderstift als Grundkörper, der mehrere radial an dessen Mantelfläche angeformte Axialführungsrippen aufweist. Diese Axialführungsrippen liegen an der ventilseitigen Stirnseite des Magnetankers an und dienen der Zentrierung des zweiten Schließkörpers innerhalb des Ventilgehäuses. Durch die Abstände zwischen den einzelnen Axialführungsrippen ist gleichzeitig ein interner Druckausgleich zwischen dem Raum im Ventilgehäuse und dem Ankerraum des Elektromagneten gewährleistet, da somit das Druckmittel ungehindert entlang des Schließkörpers sowie durch gesonderte, den Zentrierzapfen des Schließkörpers kreuzende Querschlitze und durch den Hohlraum des Magnetankers hindurch in den Ankerraum des Magnetankers hinein und aus diesem heraus fließen kann. Besonders zweckmäßig haben sich deshalb drei um 120° versetzt zueinander an der Mantelfläche des Grundkörpers angeordnete Axialführungsrippen erwiesen, deren Führungsflächen eine dem Innendurchmesser des Ventilgehäuses entsprechende Verrundung aufweisen. Denkbar wäre es jedoch auch, mehr als drei solcher Axialführungsrippen an der Mantelfläche des Grundkörpers anzuordnen. Die dem Zentrierzapfen gegenüberliegende ventilseitige Stirnseite des zweiten Schließkörpers ist darüber hinaus als mit dem ersten Ventilsitz des Hydraulikventils in Wirkverbindung stehender Schließkegel ausgebildet, der sich axial durch einen mit der losen Schließkugel für den zweiten Ventilsitz des Hydraulikventils in Wirkverbindung stehenden Stößelstift fortsetzt. Diese Schließkugel wird in einem Kunststoff-Käfig, der an einer in die Mündung des Ventilgehäuses einpressbaren Lochscheibe angeformt ist, axial beweglich gehalten und wird bei anliegendem Druckmitteldruck permanent in den zweiten Ventilsitz gepresst. Dadurch ist gewährleistet, dass im stromlosen Zustand des Elektromagneten der Druckanschluss des Hydraulikventils geschlossen und die Verbindung des Verbraucheranschlusses mit dem Tankanschluss des Hydraulikventils geöffnet bleibt.

Bei Bestromung des Elektromagneten wird dann gleichzeitig mit dem Verschließen der Verbindung zwischen dem Druckanschluss und dem Tankanschluss die Verbindung zwischen dem Druckanschluss und dem Verbraucheranschluss geöffnet, indem der zweite Schließkörper über den Stößelstift an seiner ventilseitigen Stirnseite die Schließkugel aus dem zweiten Ventilsitz gegen den Druck des hydraulischen Druckmittels herausdrückt. Über den nunmehr geöffneten zweiten Ventilsitz und die darüberliegende Radialöffnung des Verbraucheranschlusses im Ventilgehäuse kann somit der hydraulische Verbraucher mit dem hydraulischen Druckmittel versorgt werden.

Beim Abschalten der Bestromung des Elektromagneten wird die lose Schließkugel dann durch den Druckmitteldruck wieder in den zweiten Ventilsitz im Ventilgehäuse eingepresst, so dass der Druckanschluss des Hydraulikventils wieder verschlossen wird und durch die Verbindung der Schließkugel mit dem Stößelstift des zweiten Schließkörpers sowohl der Schließkörper als auch der Magnetanker des Elektromagneten wieder in ihrer Ausgangsstellung axial verschoben werden.

Das erfindungsgemäß ausgebildete elektromagnetische Hydraulikventil, insbesondere 3/2-Wegeschaltventil zur Steuerung eines variablen Ventiltriebes einer Brennkraftmaschine, weist somit gegenüber den aus dem Stand der Technik bekannten Hydraulikventilen den Vorteil auf, dass es durch Integration ansonsten gesondert ausgebildeter Einzelteile nur noch aus einer auf ein Minimum reduzierten Gesamtanzahl von Einzelteilen besteht, die zudem derart einfach gestaltet sind, dass alle Einzelteile ausnahmslos durch spanlose Fertigungsverfahren herstellbar sind. Dadurch wird nicht nur der Fertigungsaufwand für die Einzelteile wesentlich verringert, sondern auch der Aufwand für die Endmontage des Hydraulikventils, so dass sich das erfindungsgemäß ausgebildete Hydraulikventil gegenüber bekannten Hydraulikventilen insgesamt durch besonders geringe Herstellungskosten auszeichnet.

### Kurze Beschreibung der Zeichnungen

Die Erfindung wird nachfolgend anhand eines Ausführungsbeispiels näher erläutert und ist in den zugehörigen Zeichnungen schematisch dargestellt. Dabei zeigen:
- Figur 1: eine räumliche Gesamtansicht des erfindungsgemäß ausgebildeten elektromagnetischen Hydraulikventils;
- Figur 2: einen Querschnitt durch das erfindungsgemäß ausgebildete elektromagnetische Hydraulikventil;
- Figur 3: eine Sprengansicht der Einzelteile des erfindungsgemäß ausgebildeten elektromagnetischen Hydraulikventils.

### Ausführliche Beschreibung der Zeichnungen

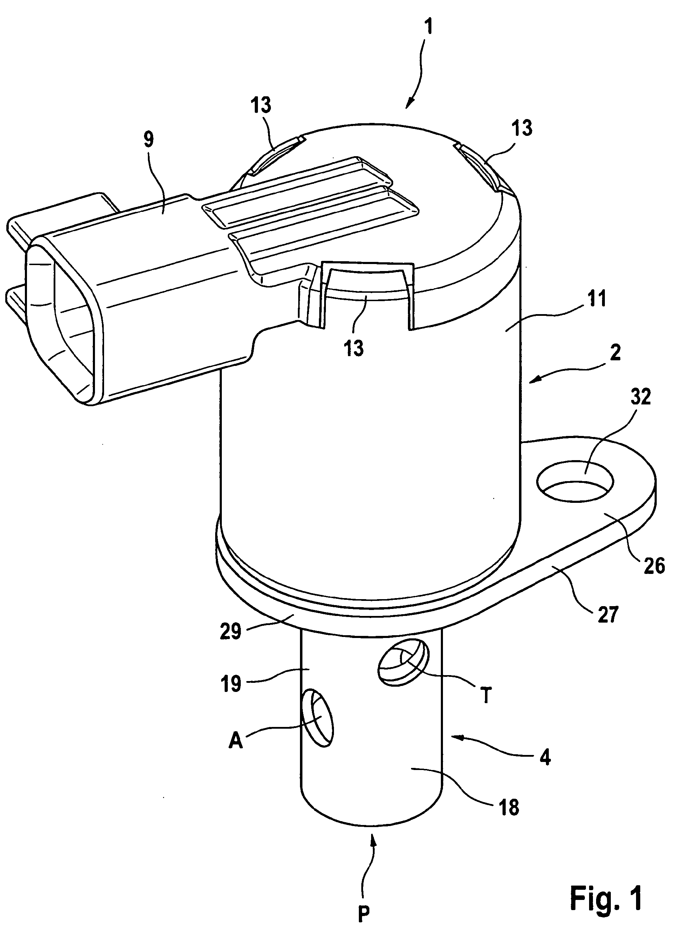

Aus den Figuren 1 bis 3 geht deutlich ein elektromagnetisches Hydraulikventil 1 hervor, welches als 3/2-Wegeschaltventil zur Steuerung eines variablen Ventiltriebes einer Brennkraftmaschine ausgebildet ist und im Wesentlichen aus einem Elektromagnet 2 mit einem axial beweglichen Magnetanker 3 sowie aus einem Ventilteil 4 mit zwei Ventilsitzen 5, 6 und einer mit dem Ventilsitz 6 korrespondierenden Schließkugel 7 besteht. Der Elektromagnet 2 wird dabei durch einen hohlzylindrischen Kunststoff-Spulenkörper 8 mit einem elektrischen Steckkontakt 9, einer im Spulenkörper 8 aufgenommenen Spulenwicklung 10 und einem die Spulenwicklung 10 umschließenden Magnetgehäuse 11 gebildet, wobei das Magnetgehäuse 11 als tiefgezogene Zylinderrohrhülse ausgebildet ist, deren eine Stirnseite einen kreisringförmigen Boden 12 bildend in das Hülseninnere abgewinkelt ist und deren andere Stirnseite mehrere Bördellaschen 13 zu dessen Verbindung mit dem Spulenkörper 8 aufweist. Der Hohlzylinder des Kunststoff-Spulenkörpers 8 ist darüber hinaus in üblicher Weise als den Magnetanker 3 des Elektromagneten 2 aufnehmender Ankerraum 14 ausgebildet, in den ein oberer Magnetpol 15 und ein unterer Magnetpol 16 hineinragen und der mit einer amagnetischen Metallhülse 17 ausgekleidet ist.

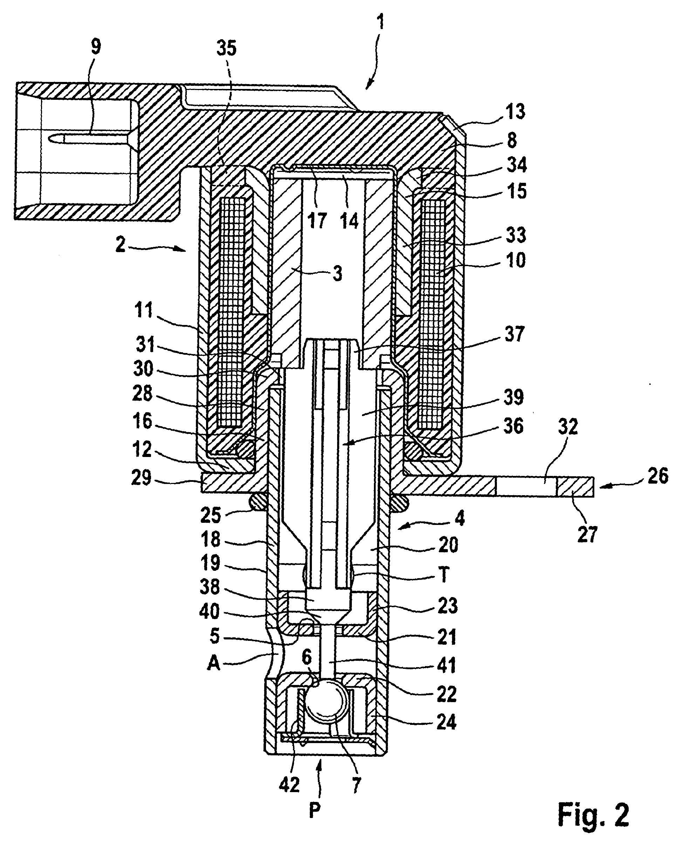

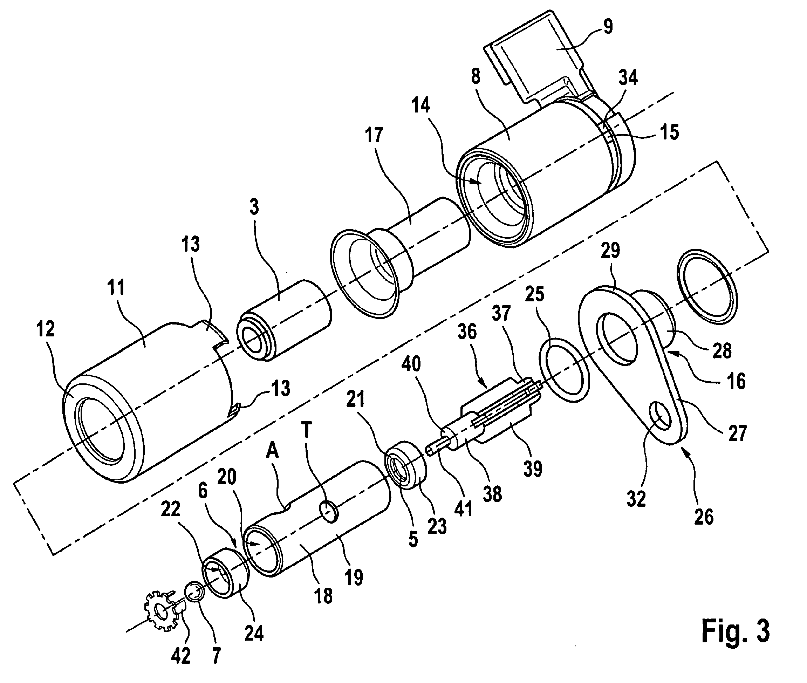

Das Ventilteil 4 des Hydraulikventils 1 wird dagegen, wie ebenfalls aus den Figuren 1 bis 3 ersichtlich ist, durch ein hohlzylindrisches Ventilgehäuse 18 gebildet, das einen stirnseitigen Druckanschluss P sowie einen jeweils als Radialöffnung in dessen Mantelfläche 19 ausgebildeten Verbraucheranschluss A und einen Tankschluss T aufweist. Die Figuren 2 und 3 zeigen dabei, dass innerhalb des Hohlzylinders 20 des Ventilgehäuses 18 jeweils zwischen dem Druckanschluss P und dem Verbraucheranschluss A sowie zwischen dem Verbraucheranschluss A und dem Tankanschluss T einer der Ventilsitze 5, 6 des Ventilteils 4 angeordnet ist, wobei die Ventilsitze 5, 6 jeweils als Axialdurchbruch im Boden 21, 22 zweier tassenförmiger Tiefziehteile 23, 24 ausgebildet sind, die über ihre Umfangsflächen durch Presssitz im Hohlzylinder 20 des Ventilgehäuses 18 befestigt sind. Mit dem derart ausgebildeten Ventilteil 4 ist das Hydraulikventil 1 dann in eine nicht dargestellte komplementäre Ventilaufnahme einsteckbar sowie über einen seitlich wegragenden Befestigungsflansch 26 neben dieser Ventilaufnahme an der Brennkraftmaschine verschraubbar, wobei das Ventilteil 4 zur Abdichtung der Ventilaufnahme gegen Druckmittelleckagen zusätzlich einen äußeren Dichtring 25 aufweist.

Darüber hinaus ist insbesondere aus den Figuren 2 und 3 deutlich erkennbar, dass zur Senkung des Fertigungs- und Montageaufwandes und somit zur Minimierung der Herstellungskosten für das Hydraulikventil 1 unter anderem auch das Ventilgehäuse 18 des Ventilteils 4 und der untere Magnetpol 16 des Elektromagneten 2 erfindungsgemäß als spanlos herstellbare Einzelteile ausgebildet sind. Zur Reduzierung der Teileanzahl sowie zur weiteren Kostensenkung ist dabei der unterer Magnetpol 16 mit dem Befestigungsflansch 26 des Hydraulikventils 1 zusätzlich als einstückiges Integralbauteil ausgebildet, welches zugleich als Steckaufnahme für das Ventilgehäuse 18 des Ventilteils 4 vorgesehen ist.

Der Sprengdarstellung des Hydraulikventils 1 in Figur 3 ist desweiteren entnehmbar, dass das Ventilgehäuse 18 des Ventilteils 4 dabei als einfacher zylindrischer Rohrabschnitt ausgebildet ist, der durch spanloses Abtrennen von einem Langrohr maßgenau abgelängt wird und welcher durch Einstanzen axial sowie um 90 ° versetzt zueinander angeordneter, einfacher Radialdurchbrüche in dessen Mantelfläche 19 mit den Verbraucheranschluss A und dem Tankanschluss T des Hydraulikventils 1 versehen wird.

Durch die gleiche Darstellung in Figur 3 wird darüber hinaus deutlich, dass der untere Magnetpol 16 des Elektromagneten 2 als durch Stanzziehen herstellbare Stegkragenhülse ausgebildet ist, deren Steg 27 als Befestigungsflansch 26 des Hydraulikventils 1 ausgebildet ist. Der Hülsenteil dieser Stegkragenhülse ist dabei, wie in Figur 2 dargestellt, derart in die Metallhülse 17 des Elektromagneten 2 einsteckbar, das deren Kragen 29 am Boden 12 des Magnetgehäuses 11 magnetisch leitend anliegt und der untere Magnetpol 16 mit dem Magnetgehäuse 11 des Elektromagneten 2 durch punktförmiges Induktionsschweißen verbunden werden kann. Im Boden 30 seines Hülsenteils 28 weist der untere Magnetpol 16 darüber hinaus eine kreisförmige Ausstanzung 31 auf, in welche der Magnetanker 3 bei Bestromung des Elektromagneten 2 teilweise eintaucht. Um dabei einen optimalen Übergang der Magnetfeldlinien vom Magnetanker 3 zum unteren Magnetpol 16 zu erreichen, ist der Durchmesser des Magnetankers 3 an dessen ventilseitiger Stirnseite mittels einer angeformten Stufe an den Durchmesser der Ausstanzung 31 im Boden 30 des unteren Magnetpols 16 angepasst.

Aus Figur 2 geht es darüber hinaus ebenfalls hervor, das auch der obere Magnetpol 15 des Elektromagneten 2 als durch Stanzziehen spanlos herstellbare Kragenhülse ausgebildet ist, die in den Kunststoff-Spulenkörper 8 des Elektromagneten 2 eingegossen ist und mit der Innenfläche ihres Hülsenteils 33 an der Metallhülse 17 des Elektromagneten 2 anliegt. Am Umfang seines Kragens 34 weist der obere Magnetpol 15 dabei mehrere Aussparungen 35 auf, die als Kunststoffübergänge zur Lagerfixierung des oberen Magnetpols 15 im Kunststoff-Spulenkörper 8 vorgesehen sind, während der übrige Kragen 34 des oberen Magnetpols 15, wie in Figur 3 angedeutet ist, mit dem Magnetgehäuse 11 magnetisch leitend verbunden ist.

Anhand der Einzeldarstellung in Figur 3 wird schließlich auch deutlich, dass der als beidseitig offene Hohlzylinderhülse ausgebildete Magnetanker 3 des Elektromagneten 2 ebenfalls spanlos durch Fließpressen herstellbar ist. Der dabei entstehende Boden wird anschließend durch Ausstanzen entfernt, um über den somit durchgehenden Hohlzylinder des Magnetankers 3 einen internen Druckausgleich zwischen dem Hohlzylinder 20 des Ventilgehäuses 18 und dem Ankerraum 14 des Elektromagneten 2 zu ermöglichen. Gleichzeitig kann die ventilseitige Hohlzylinderöffnung des Magnetankers 3 dazu genutzt werden, um in diese den Zentrierzapfen 37 eines mit der Schließkugel 7 und dem Ventilsitz 5 des Ventilteils 4 in Wirkverbindung stehenden zweiten Schließkörper 36 einzusetzen.

Dieser zweite als Kunststoff-Spritzgießteil ausgebildete Schließkörper 36 ist besonders deutlich in den Figuren 2 und 3 dargestellt, aus denen ersichtlich ist, dass dieser im Wesentlichen aus einem Zylinderstift 38 mit drei um 120° versetzt zueinander an dessen Mantelfläche angeformten radialen Axialführungsrippen 39 besteht. Diese Axialführungsrippen 39 liegen ankerseitig an der Stirnseite des Magnetankers 3 an und dienen der Zentrierung des zweiten Schließkörpers 36 innerhalb des Ventilgehäuses 18. Die dem Zentrierzapfen 37 gegenüberliegende ventilseitige Stirnseite des zweiten Schließkörpers 36 ist darüber hinaus als mit dem ersten Ventilsitz 5 in Wirkverbindung stehender Schließkegel 40 ausgebildet, der sich axial durch einen mit der losen Schließkugel 7 für den zweiten Ventilsitz 6 in Wirkverbindung stehenden Stößelstift 41 fortsetzt. Die lose Schließkugel 7 ist dabei axial beweglich innerhalb eines Kunststoff-Käfigs 42 angeordnet, der an eine in die Mündung des Ventilgehäuses 18 einpressbare Lochscheibe angeformt ist und eine exakte Anlage der Schließkugel 7 im Ventilsitz 6 gewährleistet.

### Bezugszeichenliste

- 1: Hydraulikventil
- 2: Elektromagnet
- 3: Magnetanker
- 4: Ventilteil
- 5: Ventilsitz
- 6: Ventilsitz
- 7: Schließkugel
- 8: Kunststoff-Spulenkörper
- 9: Steckkontakt
- 10: Spulenwicklung
- 11: Magnetgehäuse
- 12: Boden
- 13: Bördellaschen
- 14: Ankerraum
- 15: oberer Magnetpol
- 16: unterer Magnetpol
- 17: Metallhülse
- 18: Ventilgehäuse
- 19: Mantelfläche
- 20: Hohlzylinder
- 21: Boden
- 22: Boden
- 23: Tiefziehteil
- 24: Tiefziehteil
- 25: Dichtring
- 26: Befestigungsflansch
- 27: Steg
- 28: Hülsenteil von 16
- 29: Kragen von 16
- 30: Boden von 28
- 31: Ausstanzung von 30
- 32: Befestigungsloch
- 33: Hülsenteil von 15
- 34: Kragen von 15
- 35: Aussparung an 33
- 36: Schließkörper
- 37: Zentrierzapfen
- 38: Zylinderstift
- 39: Axialführungsrippen
- 40: Schließkegel
- 41: Stößelstift
- 42: Käfig
- P: Druckanschluss
- A: Verbraucheranschluss
- T: Tankanschluss

## Patentansprüche

1. Elektromagnetisches Hydraulikventil, insbesondere 3/2-Wegeschaltventil zur Steuerung eines variablen Ventiltriebes einer Brennkraftmaschine, mit folgenden Merkmalen:
■ das Hydraulikventil (1) besteht im Wesentlichen aus einem Elektromagnet (2) mit einem axial beweglichen Magnetanker (3) sowie aus einem Ventilteil (4) mit zumindest zwei Ventilsitzen (5, 6) und einer mit zumindest einem Ventilsitz (5, 6) korrespondierenden Schließkugel (7),
■ der Elektromagnet (2) wird durch einen hohlzylindrischen Kunststoff-Spulenkörper (8) mit einem elektrischen Steckkontakt (9), zumindest einer im Spulenkörper (8) aufgenommenen Spulenwicklung (10) und einem die Spulenwicklung (10) umschließenden Magnetgehäuse (11) gebildet,
■ das Magnetgehäuse (11) ist als Zylinderrohrhülse ausgebildet, deren eine Stirnseite einen kreisringförmigen Boden (12) bildend in das Hülseninnere abgewinkelt ist und deren andere Stirnseite mehrere Bördellaschen (13) zu dessen Verbindung mit dem Spulenkörper (8) aufweist,
■ der Hohlzylinder des Kunststoff-Spulenkörpers (8) ist zumindest teilweise als Ankerraum (14) des Magnetankers (3) ausgebildet, in den ein oberer Magnetpol (15) und ein unterer Magnetpol (16) hineinragen und der mit einer amagnetischen Metallhülse (17) ausgekleidet ist,
■ das Ventilteil (4) wird durch ein hohlzylindrisches Ventilgehäuse (18) gebildet, das einen stirnseitigen Druckanschluss (P) sowie einen jeweils als Radialöffnung in dessen Mantelfläche (19) ausgebildeten Verbraucheranschluss (A) und einen Tankanschluss (T) aufweist,
■ innerhalb des Hohlzylinders (20) des Ventilgehäuses (18) ist jeweils zwischen dem Druckanschluss (P) und dem Verbraucheranschluss (A) sowie zwischen diesem und dem Tankanschluss (T) einer der Ventilsitze (5, 6) des Ventilteils (4) angeordnet,
■ die Ventilsitze (5, 6) des Ventilteils (4) sind jeweils als Axialdurchbruch im Boden (21, 22) zweier tassenförmiger Tiefziehteile (23, 24) ausgebildet, die über ihre Umfangsflächen durch Presssitz im Hohlzylinder (20) des Ventilgehäuses (18) befestigt sind,
■ das Hydraulikventil (1) ist mit dem zumindest einen äußeren Dichtring (25) aufweisenden Ventilteil (4) in eine komplementäre Ventilaufnahme einsteckbar und weist einen Befestigungsflansch (26) auf, über den es druckmitteldicht an der Ventilaufnahme verschraubbar ist,
**dadurch gekennzeichnet, dass**
■ zumindest das Ventilgehäuse (18) des Ventilteils (4) und/oder der untere Magnetpol (16) des Elektromagneten (2) als spanlos herstellbare Einzelteile ausgebildet sind,
■ wobei der untere Magnetpol (16) mit dem Befestigungsflansch (26) des Hydraulikventils (1) als einstückiges Integralbauteil ausgebildet und zugleich als Steckaufnahme für das Ventilgehäuse (18) vorgesehen ist.

2. Hydraulikventil nach Anspruch 1, **dadurch gekennzeichnet, dass**
■ das Ventilgehäuse (18) des Ventilteils (4) als einfacher zylindrischer Rohrabschnitt ausgebildet ist, der durch spanloses Abtrennen von einen Langrohr maßgenau abgelängt wird, und
■ welcher durch Einstanzen axial versetzt zueinander angeordneter Radialdurchbrüche in dessen Mantelfläche (19) mit dem Verbraucheranschluss (A) und dem Tankanschluss (T) versehen wird.

3. Hydraulikventil nach Anspruch 1, **dadurch gekennzeichnet, dass**
■ der untere Magnetpol (16) des Elektromagneten (2) als durch Stanzziehen herstellbare Stegkragenhülse ausgebildet ist, deren Steg (27) als Befestigungsflansch (26) des Hydraulikventils (1) ausgebildet ist,
■ und welche mit ihrem Hülsenteil (28) in die Metallhülse (17) des Elektromagneten (2) derart einsteckbar ist, dass deren Kragen (29) am Boden (12) des Magnetgehäuses (11) magnetisch leitend anliegt.

4. Hydraulikventil nach Anspruch 3, **dadurch gekennzeichnet, dass**
■ der untere Magnetpol (16) im Boden (30) seines Hülsenteils (28) eine kreisförmige Ausstanzung (31) aufweist, in welche der Magnetanker (3) bei Bestromung des Elektromagneten (2) zumindest teilweise eintaucht.

5. Hydraulikventil nach Anspruch 3, **dadurch gekennzeichnet, dass**
■ der untere Magnetpol (16) und das Magnetgehäuse (11) des Elektromagneten (2) durch punkt- oder ringförmiges Induktions- oder Laserschweißen miteinander verbunden sind.

6. Hydraulikventil nach Anspruch 1, **dadurch gekennzeichnet, dass**
■ der obere Magnetpol (15) des Elektromagneten (2) ebenfalls als durch Stanzziehen spanlos herstellbare und in den Kunststoff-Spulenkörper (8) eingegossene Kragenhülse ausgebildet ist,
■ die mit der Innenfläche ihres Hülsenteils (33) an der Metallhülse (17) des Elektromagneten (2) anliegt und über ihren Kragen (34) mit dem Magnetgehäuse (11) magnetisch leitend verbunden ist.

7. Hydraulikventil nach Anspruch 6, **dadurch gekennzeichnet, dass**
■ der obere Magnetpol (15) am Umfang seines Kragens (34) mehrere Aussparungen (35) als Kunststoffübergänge zur Lagefixierung des oberen Magnetpols (15) im Kunststoff-Spulenkörper (8) aufweist.

8. Hydraulikventil nach Anspruch 1, **dadurch gekennzeichnet, dass**
■ der Magnetanker (3) des Elektromagneten (23) als beidseitig offene Hohlzylinderhülse ausgebildet ist, die ebenfalls spanlos durch Fließpressen mit anschließendem Ausstanzen des Bodens herstellbar ist,
■ und in dessen Hohlzylinder ein Zentrierzapfen (37) eines mit der Schließkugel (7) und einem Ventilsitz (5) des Ventilteils (4) in Wirkverbindung stehenden zweiten Schließkörpers (36) hineinragt.

9. Hydraulikventil nach Anspruch 8, **dadurch gekennzeichnet, dass**
■ der zweite Schließkörper (36) als Kunststoff-Spritzgießteil ausgebildet ist und im Wesentlichen aus einem Zylinderstift (38) mit mehreren an dessen Mantelfläche angeformten radialen Axialführungsrippen (39) besteht, und
■ welcher an seiner ventilteilseitigen Stirnseite einen mit dem ersten Ventilsitz in Wirkverbindung stehenden Schließkegel (40) sowie einen mit der Schließkugel (7) in Wirkverbindung stehenden Stößelsstift (41) aufweist.

## Claims

1. Solenoid-operated hydraulic valve, particularly a 3/2 directional control valve for controlling a variable valve train of an internal combustion engine, having the following features:
• the hydraulic valve (1) substantially comprises an electromagnet (2) with an axially moveable magnet armature (3), and also a valve part (4) with at least two valve seats (5, 6) and a closing ball (7) which corresponds to at least one valve seat (5, 6),
• the electromagnet (2) is formed by a hollow cylindrical plastic coil former (8) having an electrical plug contact (9), at least one coil winding (10) accommodated in the coil former (8) and a magnet housing (11) which encloses the coil winding (10),
• the magnet housing (11) is formed as a cylindrical pipe sleeve, one end side of which is bent into the sleeve so as to form an annular base (12), and the other end side of which has a plurality of flange lugs (13) for connecting it to the coil former (8),
• the hollow cylinder of the plastic coil former (8) is formed at least partially as an armature space (14) of the magnet armature (3), into which an upper magnet pole (15) and a lower magnet pole (16) protrude and which is lined with a non-magnetic metal sleeve (17),
• the valve part (4) is formed by a hollow cylindrical valve housing (18) which has a pressure connection (P) at the end side, an actuation connection (A) and a tank connection (T), each formed as a radial opening in its surface shell,
• within the hollow cylinder (20) of the valve housing (18), one of the valve seats (5, 6) of the valve part (4) is arranged in each case between the pressure connection (P) and the actuation connection (A) and between the latter and the tank connection (T),
• the valve seats (5, 6) of the valve part (4) are respectively formed as apertures in the base (21, 22) of two cup-shaped deep-drawn parts (23, 24) which are fastened in the hollow cylinder (20) of the valve housing (18) with a press fit by means of their circumferential faces,
• the hydraulic valve (1) can be plugged into a complementary valve receptacle by means of the valve part (4), which has at least one outer sealing ring (25), and said hydraulic valve (1) has a fastening flange (26), by means of which it can be screwed on to the valve receptacle in a pressure medium sealing manner,
**characterized in that**
• at least the valve housing (18) of the valve part (4) and/or the lower magnet pole (16) of the electromagnet (2) are formed as individual parts which can be produced without cutting,
• the lower magnet pole (16) being formed as a one-part integral component with the fastening flange (26) of the hydraulic valve (1) and simultaneously being provided as a plug receptacle for the valve housing (18).

2. Hydraulic valve according to Claim 1, **characterized in that**
• the valve housing (18) of the valve part (4) is formed as a simple cylindrical pipe section which is trimmed to length in a dimensionally accurate manner by means of detachment in a non-cutting manner from a long pipe, and
• which is provided with the consumer connection (A) and the tank connection (T) by punching radial apertures, which are axially offset to one another, in its surface shell (19).

3. Hydraulic valve according to Claim 1, **characterized in that**
• the lower magnet pole (16) of the electromagnet (2) is formed as a web collar sleeve which can be produced by stamp drawing, the web (27) of which is formed as a fastening flange (26) of the hydraulic valve (1),
• and which can be plugged by means of its sleeve part (28) into the metal sleeve (17) of the electromagnet (2) in such a way that its collar (29) bears against the base (12) of the magnet housing (11) in a magnetically permeable manner.

4. Hydraulic valve according to Claim 3, **characterized in that**
• the lower magnet pole (16) has, in the base (30) of its sleeve part (28), a circular punched out portion (31) into which the magnet armature (3) dips at least partially when the electromagnet (2) is supplied with current.

5. Hydraulic valve according to Claim 3, **characterized in that**
• the lower magnet pole (16) and the magnet housing (11) of the electromagnet (2) are connected to one another by means of induction welding or laser welding in spot or circular form.

6. Hydraulic valve according to Claim 1, **characterized in that**
• the upper magnet pole (15) of the electromagnet (2) is likewise formed as a collar sleeve which can be produced in a non-cutting manner by stamp drawing and which is moulded into the plastic coil former (8),
• and which bears with the inner face of its sleeve part (33) against the metal sleeve (17) of the electromagnet (2) and is connected in a magnetically permeable manner by means of its collar (34) to the magnet housing (11).

7. Hydraulic valve according to Claim 6, **characterized in that**
• the upper magnet pole (15) has at the circumference of its collar (34) a plurality of cut-outs (35) as plastic transitions for fixing the position of the upper magnet pole (15) in the plastic coil former (8).

8. Hydraulic valve according to Claim 1, **characterized in that**
• the magnet armature (3) of the electromagnet (2) is formed as a hollow cylindrical sleeve which is open at both sides and which can likewise be produced in a non-cutting manner by means of extrusion with subsequent punching out of the base,
• and into whose hollow cylinder projects a centring pin (37) of a second closing body (36) which is operatively connected to the closing ball (7) and to a valve seat (5) of the valve part (4).

9. Hydraulic valve according to Claim 8, **characterized in that**
• the second closing body (36) is formed as a plastic injection-moulded part and consists substantially of a parallel pin (38) which has a plurality of radial axial guide splines (39) integrally formed on its surface shell, and
• which has at its end side closest to the valve part a closing ball (40) which is operatively connected to the first valve seat, and also a pusher pin (41) which is operatively connected to the closing ball (7).

## Revendications

1. Electrovanne hydraulique, en particulier vanne de commande à 3/2 voies pour la commande d'un mouvement variable des soupapes d'un moteur à combustion interne, présentant les caractéristiques suivantes:
• la vanne hydraulique (1) se compose essentiellement d'un électroaimant (2) avec un noyau magnétique (3) mobile axialement ainsi que d'une partie de vanne (4) avec au moins deux sièges de soupapes (5, 6) et une bille de fermeture (7) correspondant à au moins un siège de soupape (5, 6),
• l'électroaimant (2) est formé par un corps de bobine cylindrique creux (8) en matière plastique avec un contact électrique à fiche (9), au moins une spire de bobine (10) logée dans le corps de bobine (8) et un corps d'aimant (11) entourant la spire de bobine (10),
• le corps d'aimant (11) est réalisé sous forme d'une douille cylindrique creuse, dont une face frontale est coudée vers l'intérieur de la douille en formant un fond annulaire (12) et dont l'autre face frontale présente plusieurs pattes d'agrafage (13) pour sa fixation au corps de bobine (8),
• le cylindre creux du corps de bobine (8) en matière plastique est réalisé au moins en partie sous forme de chambre de noyau (14) du noyau magnétique (3), dans laquelle pénètrent un pôle magnétique supérieur (15) et un pôle magnétique inférieur (16) et qui est revêtue d'une douille métallique amagnétique (17),
• la partie de vanne (4) est formée par un corps de soupape cylindrique creux (18), qui présente un raccord de pression frontal (P) ainsi qu'un raccord de consommateur (A) et un raccord de remplissage (T) réalisés sous forme d'ouverture radiale dans sa surface latérale (19),
• un des sièges de soupape (5, 6) de la partie de vanne (4) est disposé à l'intérieur du cylindre creux (20) du corps de soupape (18), respectivement entre le raccord de pression (P) et le raccord de consommateur (A) ainsi qu'entre celui-ci et le raccord de remplissage (T),
• les sièges de soupape (5, 6) de la partie de vanne (4) sont chaque fois réalisés sous forme de passage axial dans le fond (21, 22) de deux pièces embouties (23, 24) en forme de godets, qui sont fixées avec leurs surfaces périphériques par ajustement serré dans le cylindre creux (20) du corps de soupape (18),
• la vanne hydraulique (1) peut être introduite avec la partie de vanne (4) présentant au moins un joint d'étanchéité extérieur (25) dans un logement de soupape complémentaire et comprend une bride de fixation (26), par laquelle elle peut être vissée sur le logement de soupape de façon étanche au fluide sous pression,
**caractérisée en ce que**
• au moins le corps de soupape (18) de la partie de vanne (4) et/ou le pôle magnétique inférieur (16) de l'électroaimant (2) sont des pièces individuelles réalisables sans enlèvement de copeaux,
• le pôle magnétique inférieur (16) étant réalisé sous forme de pièce intégrée d'un seul tenant avec la bride de fixation (26) de la vanne hydraulique (1) et étant en même temps prévu comme logement d'enfichage pour le corps de soupape (18).

2. Vanne hydraulique selon la revendication 1, **caractérisée en ce que**:
• le corps de soupape (18) de la partie de vanne (4) est réalisé sous forme de partie tubulaire cylindrique simple, qui est coupée à longueur à la mesure exacte par découpage sans enlèvement de copeaux d'un tube allongé, et
• qui est pourvue du raccord de consommateur (A) et du raccord de remplissage (T) par estampage de passages radiaux disposés avec un décalage axial l'un par rapport à l'autre dans sa surface latérale (19).

3. Vanne hydraulique selon la revendication 1, **caractérisée en ce que**:
• le pôle magnétique inférieur (16) de l'électroaimant (2) est réalisé sous forme de douille à collerette réalisable par étirage à la presse, dont la nervure (27) est réalisée sous forme de bride de fixation (26) de la vanne hydraulique (1),
• et qui peut être introduite avec sa partie de douille (28) dans la douille métallique (17) de l'électroaimant (2) de telle façon que sa collerette (29) s'applique en liaison magnétique sur le fond (12) du corps d'aimant (11).

4. Vanne hydraulique selon la revendication 3, **caractérisée en ce que**:
• le pôle magnétique inférieur (16) présente dans le fond (30) de sa partie de douille (28) une découpe circulaire (31) dans laquelle le noyau magnétique (3) plonge au moins partiellement lors de l'excitation de l'électroaimant (2).

5. Vanne hydraulique selon la revendication 3, **caractérisée en ce que**:
• le pôle magnétique inférieur (16) et le corps d'aimant (11) de l'électroaimant (2) sont assemblés l'un à l'autre par soudage par points ou par soudage annulaire par induction ou par soudage au laser.

6. Vanne hydraulique selon la revendication 1, **caractérisée en ce que**:
• le pôle magnétique supérieur (15) de l'électroaimant (2) est également réalisé sous forme d'une douille à collerette réalisable sans enlèvement de copeaux par étirage à la presse et moulée dans le corps de bobine en matière plastique (8),
• qui repose par la face intérieure de sa partie de douille (33) sur la douille métallique (17) de l'électroaimant (2) et est assemblée en liaison magnétique par sa collerette (34) au corps d'aimant (11).

7. Vanne hydraulique selon la revendication 6, **caractérisée en ce que**:
• le pôle magnétique supérieur (15) présente, sur le pourtour de sa collerette (34), plusieurs découpes (35) comme transitions en matière plastique pour la fixation de la position du pôle magnétique supérieur (15) dans le corps de bobine (8) en matière plastique.

8. Vanne hydraulique selon la revendication 1, **caractérisée en ce que**:
• le noyau magnétique (3) de l'électroaimant (2) est réalisé sous forme de douille cylindrique creuse ouverte aux deux extrémités, qui est également réalisable sans enlèvement de copeaux par extrusion puis estampage du fond,
• et un tourillon de centrage (37) d'un deuxième corps de fermeture (36) se trouvant en communication active avec la bille de fermeture (7) et un siège de soupape (5) de la partie de vanne (4) pénètre dans son cylindre creux.

9. Vanne hydraulique selon la revendication 8, **caractérisée en ce que**:
• le deuxième corps de fermeture (36) est constitué par une pièce moulée par injection en matière plastique et se compose essentiellement d'une tige cylindrique (38) avec plusieurs ailettes radiales de guidage axial (39) formées sur sa surface latérale, et
• qui comporte, sur sa face frontale proche de la partie de vanne, un cône de fermeture (40) se trouvant en communication active avec le premier siège de soupape ainsi qu'une tige de poussoir (41) se trouvant en communication active avec la bille de fermeture (7).
